# EUROPÄISCHE PATENTANMELDUNG

(11) **EP 2 537 821 A2**
(43) Veröffentlichungstag der Anmeldung: **26.12.2012**
(21) Anmeldenummer: 12172718.4
(22) Anmeldetag: 20.06.2012
(51) Int. Cl.: C04B 41/53, C04B 41/48

(54) **Verfahren zur Reinigungsbehandlung einer Salzverschmutzungen aufweisenden, offenporigen Fläche**

(30) Priorität: 20.06.2011 DE 102011051194
(71) Anmelder: Verweyen, Marc, 47551 Bedburg-Hau (DE)
(72) Erfinder: Verweyen, Marc, 47551 Bedburg-Hau (DE)
(74) Vertreter: Kreuzkamp, Markus

(57) **Zusammenfassung**

Verfahren zur Reinigungsbehandlung einer Salzverschmutzungen aufweisenden, offenporigen Fläche unter Verwendung mindestens zweier Komponenten umfassend eine wässrige, starke Säurelösung und eine Flüssigkeit abweisende Imprägnierbeschichtung, umfassend Verfahrensschritte, in denen....
a1) die offenporige, trockene Fläche mit einer hydrophoben Imprägnierbeschichtung beaufschlagt wird
a2) die hydrophobe Imprägnierbeschichtung in die Poren einzieht und diese hydrophobiert
b1) die hydrophobierte Fläche mit der wässrigen Säurelösung beaufschlagt wird, wobei die Säurelösung die Salzverschmutzungen ablöst und die Fläche reinigt
c1) die Salz enthaltende Säurelösung entfernt wird.

## Beschreibung

### TECHNISCHER BEREICH

Die vorliegende Erfindung betrifft ein Verfahren zur Reinigungsbehandlung einer Salzverschmutzungen aufweisenden, offenporigen Fläche gemäß dem Oberbegriff der unabhängigen Ansprüche.

Offenporige Flächen sind ob ihrer Poren saugfähig und können Schmutz und korrosive Stoffe in Lösung aufnehmen und tief unter die besagte Fläche eindringen lassen.

Salzverschmutzungen stellen dabei gerade bei Flächen auf Keramik-, Stein und Baustoffbasis ein weit verbreitetes Problem dar: Salze können sowohl als Anlagerung und Antragung auf der Fläche aufziehen als auch in Lösung unter die Fläche eindringen. Gerade Letzteres führt zu Salzverschmutzungen in Form von Ausblühungen, Rekristallisationen und Aufwachsungen, welche die Fläche deutlich optisch verändern und entstellen. Als Beispiel hierfür seien Grauschleier genannt, welche nach einem nassen Verfugen und/oder Verlegen von offenporigen Fliesen und Verblender regelmäßig anzutreffen sind: Nass verarbeitet dringen Salze aus dem Baustoff in wässriger Lösung tief ein, trocknen ab und lassen dabei Salze in kristalliner Form auf der Fläche entstehen. Dadurch erhält die Fläche einen dünnen, durchgehenden Grauschleier, welcher die Fläche unansehnlich, stumpf und schmutzig aussehen lässt. Zudem erzeugen einmal entstandene Ausblühungen und Kristalle einen starken, hygroskopischen Zug, welcher in Folge aus benachbarten Baustoffmischungen wie Fugenmörtel Feuchtigkeit in Kombination mit weiteren Salzen zu entziehen vermag. In Summe betrachtet führen Salzverschmutzungen so zu einer unansehnlichen Optik und fördern in schädlicher Weise weitere Salzverschmutzungen und Korrosion.

### BESCHREIBUNG DES STANDES DER TECHNIK

Gattungsgemäße Verfahren zur Entfernung solcher Salzverschmutzungen sehen vorbereitend ein sorgfältiges Nässen und Spülen der offenporigen Fläche bis zur ausreichenden Sättigung vor, damit direkt auslösbare Salze sicher entfernt werden. Anschließend wird die Oberfläche ggf. noch mechanisch von Salzverschmutzungen in Form von wenig lösbaren Vergipsungen oder harten Verkrustungen befreit, mit einer harten Säure gereinigt, getrocknet und imprägniert. Die abschließende Imprägnierung soll das erneute Eindringen von Salz oder Salz-Lösung hemmen und die Fläche verbessert gegen Salzkorrosion in Form der vorbeschriebenen Salzverschmutzungen schützen.

Aus der DE 40 41 607 C2 ist ein Verfahren bekannt, bei dem ein offenporiger Bodenbelag aus Terracotta vorbereitend zur Imprägnierung mit einer wässrigen Säure behandelt und intensiv mit Wasser gespült wird, bis die Säure nahezu restlos entfernt worden ist. Nachfolgend wird der Bodenbelag getrocknet, mit einer Flüssigkeit abweisenden Imprägnierung versehen und abschließend mit einer polymerangereicherten Wachsdispersion imprägniert.

Aus der DE 10 2005 013 220 A1 ist weiterhin ein einstufiges Verfahren bekannt, bei dem eine Mischung aus wässrigem Säurereiniger und imprägnierendem Säureschutz aufgebracht wird, um bei zeitsparender Arbeitsweise eine Beschädigung der offenporigen Fläche durch die starke Säure mit geeignetem Zusatz vorteilhaft vermeiden zu können.

Nachteilig ist bei den gattungsgemäßen Verfahren, dass diese sehr viel Wasser benötigen, um im vorbereitenden Schritt eine gründliche Auslösung aller löslichen Salze an und unterhalb der Fläche sicherzustellen. Nachfolgend muss dieses Einnässen mehrfach wiederholt werden, um ein ausreichend tiefes Durchspülen des offenporigen Materials zu gewährleisten, da oberflächliche Salze durch das Wasser im Rahmen des ersten Nässens auch in das Material mit eingeschleppt werden.

Weiterhin nachteilig ist, dass die etablierten Verfahren eine lange, nachfolgende Trocknungszeit benötigen, da sonst bei der anschließenden Imprägnierung Wasser in dem Material eingeschlossen werden könnte.

Problematisch ist, dass eine Imprägnierung einer frisch wässrig abgetrockneten Fläche mit Mitteln auf Wachs- oder Ölbasis häufig nur oberflächlich gelingt, da Feuchtigkeitsreste im Materialinneren ein Eindringen der hydrophoben Öle und Wachse behindern. Besonders problematisch ist, dass besagte Öle und Wachse einen hohen Schmelzpunkt haben und zu erstarren drohen, bevor sie vollständig eingedrungen sind; bei solchen Imprägniermitteln ist häufig eine zusätzliche Erwärmung der Fläche nötig, um eine ausreichende Fließfähigkeit und Eindringtiefe des Imprägniermittels sicherzustellen, was zusätzliche, hohe Energiekosten bedingt. Zudem binden gerade Öle schlecht ab und können zu einer öligen, dauerhaft im Sommer Imprägnierflüssigkeit ausschwitzenden Oberfläche führen, welche gleichfalls die ursprüngliche, optische Charakteristik der Fläche inakzeptabel beeinträchtigt.

Aus der DE 30 18 116 C2 ist ein gattungsgemäßes Verfahren bekannt, bei dem poröse, Salzverschmutzungen aufweisende Baustoffflächen vorbereitend durch trockenes Einbürsten eines hydrophobierenden Mittels in die Poren imprägniert werden. Anschließend wird mit wässriger Säurelösung die Oberfläche gereinigt. Die Poren bleiben hierbei durch das zuvor eingebürstete Mittel dauerhaft verschlossen. Insbesondere wird als hydrophobierendes Mittel ein hydrolysierbares Organosiloxan in vorhydrolysiertem Zustand verwendet, welches bei der abschließenden, wässrigen Reinigung vollständig hydrolysiert und mithin in den Poren aushärtet. Nachteilig ist hierbei, dass mit verschlossenen Poren die Fläche dauerhaft versiegelt ist, wodurch auf längere Zeit betrachtet im Inneren eingeschlossene Feuchtigkeit die Fläche schädigen und verstärkt verwittern lassen kann. Weiterhin nachteilig ist, dass die verschlossenen Poren auf der Oberfläche optisch das Erscheinungsbild der Fläche beeinträchtigen können; schlimmstenfalls entsteht durch die verschlossenen Poren selbst der Eindruck eines Grauschleiers, wodurch der angestrebte Effekt der Reinigung in sein Gegenteil verkehrt werden kann.

Aufgabe der vorliegenden Erfindung war es daher, die Nachteile des Standes der Technik zu überwinden und ein Verfahren bereitzustellen, welches trotz zügiger, schneller Arbeitsweise eine langlebige und wirksame Imprägnierung bereitzustellen vermag, ohne die optische Charakteristik der ursprünglichen Fläche zu beeinträchtigen.

Die Lösung dieser Aufgabe erfolgt gemäß der Merkmale der unabhängigen Ansprüche. Vorteilhafte Ausführungsformen ergeben sich aus den abhängigen Ansprüchen sowie der nachfolgenden Beschreibung.

### ZUSAMMENFASSUNG DER ERFINDUNG

Erfindungsgemäß ist das beanspruchte Verfahren zur Reinigungsbehandlung einer Salzverschmutzungen aufweisenden, offenporigen Fläche **dadurch gekennzeichnet, dass** das Verfahren die Schritte umfasst, dass
a1) die offenporige, trockene Fläche mit einer hydrophoben Imprägnierbeschichtung beaufschlagt wird
a2) die hydrophobe Imprägnierbeschichtung in die Poren einzieht und diese hydrophobiert,
   wobei die Imprägnierbeschichtung eine kriechfähige, hydrophobierende Komponente aufweist, welche stetig weiter in die Poren einzieht
b1) die hydrophobierte Fläche mit wässriger Säurelösung beaufschlagt wird, wobei die Säurelösung die Salzverschmutzungen ablöst und die Fläche reinigt
c1) die Salz enthaltende Säurelösung entfernt wird und
   die kriechfähige Komponente unter Öffnung von mit Imprägnierbeschichtung verschlossenen Poren aktiv die Imprägnierbeschichtung aufbringt und eine optisch ebenmäßig imprägnierte, einheitliche, gereinigte Außenfläche ausbildet.

### BESCHREIBUNG DER ERFINDUNG UND VORTEILHAFTER MERKMALE

In Schritt a1 wird eine fließfähige Imprägnierbeschichtung auf die trockene, offenporige Fläche aufgebracht. Im Widerspruch zu den etablierten Verfahren wird die Oberfläche daher nicht vorgenässt sondern allenfalls mechanisch vorbehandelt, um die Offenporigkeit zu gewährleisten.

In Schritt a2 zieht die Imprägnierbeschichtung auf der trockenen Fläche auf und dringt in die Poren ein. Dadurch wird der Fläche und den Poren eine hydrophobe Oberfläche verliehen, ohne dass zunächst Salzverschmutzungen angelöst würden. Es fehlt an Wasser, welches die Salzverschmutzungen anlösen oder in die Poren eindringen lassen könnte. Vielmehr sind die Poren nun hydrophobiert und hemmen das Eindringen von wässrigen Lösungen.
In Schritt b1 kann die Säurelösung daher nur die direkt auf der Oberfläche vorliegenden Salzverschmutzungen kontaktieren. Bevorzugt wird dies mechanisch unterstützt, indem beispielsweise Bürsten oder Schwämme zum Einsatz kommen. Die Salzverschmutzungen werden durch den direkten Angriff der Säurelösung abgelöst und gehen in die Säurelösung über. In Schritt c1 kann die Salz enthaltende Säurelösung schließlich von der Fläche entfernt werden. Die in a2 hydrophobierten Poren unterstützen hierbei vorteilhaft durch ihre Wasser abweisende und ausleitende Oberfläche eine zügige, vollständige Entfernung und machen einen abschließenden Trocknungsvorgang weitestgehend überflüssig. Zudem hemmt die hydrophob eingestellte Oberfläche die feuchtigkeitsbasierte Diffusion von Salzen an die Oberfläche und verleiht der gereinigten, hydrophobierten, offenporigen Fläche eine vorteilhaft verbesserte Langzeitbeständigkeit.

Bevorzugt ist das beanspruchte Verfahren zudem **dadurch gekennzeichnet, dass** in Schritt a2) die Imprägnierbeschichtung über ein nicht-ionisches Benetzungsmittel in die Poren eingebracht wird. Ein nicht-ionisches Benetzungsmittel verbessert die Fähigkeit der Imprägnierbeschichtung auf der trockenen Fläche - bevorzugt keramischen oder oxidischen, mikroporösen Fläche - aufzuziehen und zu spreiten, ohne dass nachfolgend eine Übergang des Benetzungsmittels in das Wasser befürchtet werden muss: Die nicht-ionische Natur macht eine Auflösung in einer Hydrathülle, wie sie bei Salzen und ionischen Verbindungen im Rahmen der Auflösung üblich ist, unmöglich.

Bevorzugt dient dabei als nicht-ionisches Benetzungsmittel ein Fettalkohol mit mindestens 14 C-Atomen. Der große Kohlenwasserstoff-Rest eines solchen Alkohols stellt dessen gute Kompatibilität mit hydrophoben, fließfähigen Mischungen auf Ölbasis sicher, während die Alkoholgruppe das Einziehen der Mischung in oxidischen und keramischen, mikroporösen Flächen verbessert.

Besonders bevorzugt wird als nicht-ionisches Benetzungsmittel ein Fettalkohol mit mindestens 14 C-Atomen in schaumbremsender Kombination mit einem Alkylpolyglycosid verwendet. Selbst wenn es innerhalb der Poren zu einer Reaktion des Imprägnierungsmittels mit Salzen wie Karbonaten kommt, werden die dabei entstehenden Gase ohne nennenswerte Schaumbildung ausgeleitet und eine vorteilhaft umfassende Hydrophobierung wird selbst bei starker Verkalkung der Fläche sicher bereitgestellt.

Erfindungsgemäß ist das beanspruchte Verfahren zudem **dadurch gekennzeichnet, dass** die aufgebrachte Imprägnierbeschichtung eine kriechfähige, hydrophobierende Komponente aufweist, welche stetig weiter in die Poren einzieht. So ausgerüstet vermag die Imprägnierbeschichtung auch zu starke Beaufschlagungen auszugleichen: Im Rahmen von übermäßiger, vorbereitender Imprägnierung oberflächlich verschlossene Poren werden im Nachhinein während des weiteren Eindringens unter Aufziehen der Imprägnierbeschichtung auf die Poreninnenfläche wieder geöffnet, sodass stets eine atmungsaktive, offenporige Struktur sichergestellt ist, deren Oberfläche mit einer ebenmäßigen Schichtdicke an Imprägnierbeschichtung versehen ist. Kohäsion der Imprägnierbeschichtung und Adhäsion der Imprägnierbeschichtung auf der offenporigen Fläche und in den Poren sind ausgleichend eingestellt und wirken auf die Ausbildung einer ebenmäßigen, einheitlich dicken Imprägnierbeschichtung hin. Besonders vorteilhaft kommt dieser aktive Ausgleichs-Effekt ergänzend bei stark verkrusteten Oberflächen zum Tragen: Während des Ablösens von abdeckenden Salzkrusten werden Flächenbereiche freigelegt, welche bis dahin nicht imprägniert waren. Auf diese Bereiche wird die kriechfähige Komponente aktiv die Imprägnierbeschichtung auch nachträglich noch aufbringen und optisch eine ebenmäßig imprägnierte, einheitliche, gereinigte Außenfläche sicherstellen, wodurch ein besonders einfach anzuwendendes Verfahren mit vorteilhaft verbesserter, optischer Wirkung bereitgestellt wird.

Bevorzugt ist das beanspruchte Verfahren zudem **dadurch gekennzeichnet, dass** die Imprägnierbeschichtung eine langsam und stetig aushärtende Komponente umfasst. Durch eine gleichmäßige, langsame Aushärtung wird die Beschichtung dauerhaft auf der gereinigten Oberfläche fixiert und in den Poren verankert. Dadurch wird vorteilhaft ohne zusätzlichen Verfahrensschritt eine sowohl oberflächlich anliegende als auch über tiefgehende, in Poren reichende Ankerbrücken fixierte, dauerhaft ausgehärtete Beschichtung zugänglich.

Bevorzugt dient eine polymerisierende Polymermischung als aushärtende Komponente; besonders bevorzugt kommt eine Polymerisation zum Tragen, welche über Schwermetalle katalysierbar ist. Schwermetalle finden sich regelmäßig in oxidischen und keramischen Werkstoffen, wodurch gerade auf solchen Oberflächen im Rahmen der katalysierten Polymerisation Ankerpunkte geschaffen werden, welche einen verbesserten Halt bieten und besonders vorteilhaft bei langsam von der offenporigen Fläche ausgehender Polymerisation eine Fließfähigkeit der Schicht an der Oberfläche ermöglichen.

Bevorzugt ist das beanspruchte Verfahren zudem **dadurch gekennzeichnet, dass** die Imprägnierbeschichtung neutral bis schwach sauer eingestellt ist. Derart eingestellt vermag die im Reinigungsschritt verwendete Säurelösung keinerlei Reaktion mit der Imprägnierbeschichtung einzugehen, welche der Imprägnierung entgegenwirken könnte. Daher können mit so eingestellten Imprägnierbeschichtungen je nach Verschmutzung vorteilhaft ausgewählte Säuren verschiedener Stärke und Natur verwendet werden, was optimale Reinigungseffekte in Abhängigkeit der vorherrschenden Verschmutzung möglich macht, ohne dass das Verfahren in Bezug auf die Imprägnierbeschichtung anzupassen wäre.

Bevorzugt ist das beanspruchte Verfahren zudem **dadurch gekennzeichnet, dass** die Imprägnierbeschichtung eine nicht-biogene, hydrophobe Komponente auf Kohlenwasserstoffbasis aufweist. Natürlich nicht vorkommende Kohlenwasserstoffverbindungen wie zum Beispiel bestimmte, langkettige Fettsäuren mit ungerader Anzahl an C-Atomen werden im Sinne der vorliegenden Erfindung als nicht-biogen bezeichnet. Solche Verbindungen bringen den Vorteil ein, dass sie einem Abbau durch natürlich vorkommende Organismen wie Bakterien widerstehen und auch bei feucht-warmen, für Mikroorganismen geeigneten Witterungen die Langzeitstabilität der Beschichtung verbessern.

Besonders bevorzugt dient ein medizinisches Weißöl als nicht-biogene Komponente. Solche Weißöle enthalten natürlich nicht vorkommende Fraktionen an Kohlenwasserstoffen, sind aber durch sorgfältige Reinigung von aromatischen, bei Menschen Krebs erzeugenden Anteilen befreit worden. Vorteilhaft erlauben solche Zusätze daher die Verarbeitung ohne besondere Schutzmaßnahmen und im Innenbereich und hemmen einen Abbau durch Mikroorganismen, ohne den Verwender zusätzlich zu gefährden.

Bevorzugt ist das beanspruchte Verfahren zudem **dadurch gekennzeichnet, dass** mindestens ein Beaufschlagen mit einer Komponente gemäß mindestens eines Verfahrens ausgewählt aus der Gruppe bestehend aus Benebeln, Besprühen, Spritzen, Pinseln, Rollen, Bürsten, Fluten, Schäumen, Drucken, Tauchen durchgeführt wird.

Benebeln bietet den Vorteil einer sehr gleichmäßigen, sukzessiven Auftragung.
Besprühen bietet den Vorteil einer raschen, gleichmäßigen Auftragung.
Spritzen bietet den Vorteil einer sehr schnellen Auftragung.
Pinseln bietet den Vorteil einer sehr materialsparenden, effektiven Auftragung.
Rollen bietet den Vorteil einer flächigen, druckunterstützten, eindringenden Auftragung. Bürsten bietet den Vorteil einer Verschmutzung auch mechanisch ablösenden Auftragung. Fluten bietet den Vorteil einer extrem schnellen, flächigen Auftragung.
Schäumen bietet den Vorteil einer sehr sparsamen, flächigen Auftragung.
Drucken bietet den Vorteil einer flächig klar begrenzbaren, steuerbaren Auftragung. Tauchen bietet den Vorteil einer extrem schnellen, druckunterstützten Auftragung und Einbringung.

Bevorzugt ist das beanspruchte Verfahren zudem **dadurch gekennzeichnet, dass** in Schritt b1) die Säurebeaufschlagung für 1 bis 15 Minuten erfolgt. Ein Zeitfenster von mindestens 1 Minute erlaubt bei einer starken Säure bereits die Auflösung aller gängigen, nach wenigen Jahren üblichen Salzverschmutzungen. Mit 15 Minuten Einwirkzeit kann mit starken Säurelösungen mit einem pH-Wert im Bereich 0 bis 2 auch bei gravierender Salzbelastung von einer wirksamen Reaktion der Säure ausgegangen werden.

Bevorzugt erfolgt die Einwirkung der Säure mechanisch unterstützt, um selbst hartnäckige Verkrustungen vorteilhaft wirksam an- und abzulösen.

Bevorzugt ist das beanspruchte Verfahren zudem **dadurch gekennzeichnet, dass** die aufgebrachte Imprägnierbeschichtung in Kombination mit allen weiteren, vorhandenen Komponenten in einem Schritt d1) innerhalb von wenigen Stunden bis maximal 3 Tagen eine staubund grifffeste, farbverstärkende Imprägnierung ausbildet. Die farbverstärkende, staubfeste Imprägnierung zeigt dann optisch ohne weitere, besondere Maßnahmen klar erkenntlich auf, wo eine reinigende Beschichtung wirksam erzielt wurde. Letzteres erlaubt ohne zusätzliche Ausrüstungen oder besondere Erfahrung eine Überprüfung der Beschichtung auf Vollständigkeit und macht eine vollständige, langlebige Schutzimprägnierung auch für ungeübte Laien einfach und direkt nachprüfbar zugänglich.

Weitere Vorteile ergeben sich aus den Ausführungsbeispielen. Es versteht sich, dass die vorbeschriebenen Merkmale und Vorteile und nachfolgenden Ausführungsbeispiele nicht beschränkend aufzufassen sind. Vorteilhafte sowie bevorzugte, zusätzliche Merkmale und zusätzliche Merkmalskombinationen, wie sie in der Beschreibung erläutert sind, können im Rahmen der unabhängigen Ansprüche im beanspruchten Gegenstand sowohl einzeln als auch abweichend kombiniert verwirklicht werden, ohne dass der Bereich der Erfindung verlassen würde.

### DETAILLIERTE ERLÄUTERUNG DER ERFINDUNG AN HAND VON AUSFÜHRUNGBEISPIELEN

In besonders vorteilhafter Ausführungsform umfasst die vorliegende Erfindung ein Verfahren zur Reinigungsbehandlung einer Salzverschmutzungen aufweisenden, offenporigen Fläche, unter Verwendung mindestens zweier Komponenten umfassend eine wässrige, starke Säurelösung und eine Flüssigkeit abweisende Imprägnierbeschichtung wobei das Verfahren die Schritte umfasst, dass
a1) die offenporige, trockene Fläche mit einer hydrophoben Imprägnierbeschichtung beaufschlagt wird,
   - die Imprägnierbeschichtung aufweisend mindestens ein schaumbremsendes nicht-ionisches Benetzungsmittel, eine nicht-biogene aromatenfreie hydrophobierende Komponente, mindestens ein unter Licht- und Sauerstoffeinfluss
      in Stunden bis Tagen polymerisierendes Monomer, Rest Stell-, Pflege- und Hilfsstoffe
      sowie unvermeidbare Verunreinigungen
a2) die hydrophobe Imprägnierbeschichtung innerhalb von 5 bis 10 Minuten in die Poren einzieht und diese hydrophobiert,
b1) die hydrophobierte Fläche mit der wässrigen Säurelösung beaufschlagt wird,
   - die Säurelösung aufweisend bis zu 5% schaumbildende Tenside, mindestens eine Mineralsäure, mindestens einen pH-Regulator für den Bereich pH = 0 bis 5, bevorzugt 0,5 bis 4,5, besonders bevorzugt 1 bis 2,
   Rest Stell-, Pflege- und Hilfsstoffe sowie unvermeidbare Verunreinigungen, und die Salzverschmutzungen innerhalb von 15 Minuten unter Schaumbildung abgelöst und die Fläche gereinigt wird
c1) die Salz enthaltende Säurelösung entfernt wird
d1) innerhalb von wenigen Stunden bis maximal 3 Tagen die aufgebrachte Imprägnierbeschichtung mit allen Komponenten eine staub- und grifffeste, farbverstärkende, offenporige Imprägnierung ausbildet.

Die bevorzugte Beaufschlagung mit Imprägnierbeschichtung umfassend ein nichtschäumendes Benetzungsmittel stellt eine verbesserte, tief eindringende Benetzung bereit, wobei mit einer Behandlungszeit von 5 bis 10 Minuten ein frühzeitiges oder behinderndes Polymerisieren der Monomer-Komponente auch bei sehr warmem Wetter unter Sonneneinstrahlung sicher vermieden ist. So wird im nachfolgenden Schritt bei der Beaufschlagung mit Säure eine vorteilhafte, maximale Wirksamkeit der Säure gegenüber den Salzverschmutzungen erreicht. Bevorzugt wird durch die schaumbildenden Tenside der Säure eine Reaktion der Säure insbesondere mit Verkalkungen klar angezeigt, sodass an ausbleibender, weiterer Schaumbildung deutlich erkannt werden kann, dass die Säure ihre Reinigungskraft umfassend freigesetzt hat. Besonders bevorzugt ist der pH-Wert auf den festen Bereich pH = 0 bis 5, bevorzugt 0,5 bis 4,5, besonders bevorzugt 1 bis 2 mittels eines Puffers eingestellt. Ein Puffer stellt die Acidität über einen breiten Konzentrationsbereich einer Säure ein, wodurch auch höhere Konzentrationen an besonders wirksamen, aciden Säuren wie Mineralsäuren vorgesehen werden können, ohne dass durch zu hohe Acidität eine Korrosion der Oberfläche selbst zu befürchten wäre. Dadurch wird eine gleichbleibende Reinigungskraft eingestellt, welche vorteilhaft die Salzverschmutzungen wirksam ablöst, ohne jedoch die Fläche selbst nennenswert angreifen zu können. In bevorzugter Kombination ermöglichen die Maßnahmen eines schaumbildenden Tensids und eines pH-Regulators das Bereitstellen eines Verfahrens, welches vorteilhaft schon mit wenigen Minuten Einwirkzeit und klar sichtbarer Indikation der Säurereaktion unter Schaumbildung eine wirksame und besonders einfache Reinigung mit präzise eingestellter Acidität und hoher Kapazität an Säure bietet. In dieser vorteilhaften Kombination an Maßnahmen konnte zuverlässig auch im Außenbereich bei üblichen, europäischen Wetter- und Temperaturlagen mit spätestens 15 Minuten Einwirkzeit eine gründliche Reinigungsleistung festgestellt werden. Die abgelösten Salze konnten nachfolgend durch abziehen, abwischen oder Abspülen entfernt werden. Die Imprägnierbeschichtung bildet abschließend unter Polymerisation sowie Aushärtung ihrer Komponenten eine staub- und grifffeste, farbverstärkende Schicht aus, in der eine feste Matrix aus polymerisierten Monomeren und ausgehärteten Anteilen die Mischung als Ganzes zuverlässig auf der Oberfläche fixiert; vorteilhaft ist durch die durch Licht- und Sauerstoffeinfluss angeregte Polymerisation eine durchgehende, stabilisierende Außenschicht bereitgestellt, welche einen zusätzlichen, mechanischen Schutz einbringt.

Bevorzugt auf Boden- oder Wandflächen aufgebracht bietet diese besonders vorteilhafte Ausführungsform sowohl eine optisch vorteilhafte Farbverstärkung als auch eine erhöhte, mechanische Belastbarkeit: Die behandelten Flächen sind weniger Abrieb und Verschleißempfindlich.

Besonders bevorzugt auf Blendmauerwerk auf Basis offenporiger Steine aufgebracht wird hierbei in Kombination mit der nicht-biogenen, aromatenfreien Komponente gerade im Außenbereich eine vorteilhaft verbesserte Beständigkeit gegen Verkeimung und Verpilzung eingebracht.

Bevorzugt durch Besprühen beaufschlagte Komponenten stellen vorteilhaft eine gleichmäßige Verteilung bereit, wobei besonders vorteilhaft überschüssige, ablaufende Imprägnierbeschichtung im Verfahrensbeginn aufgefangen und recycelt werden kann, da diese weder durch Wasser noch durch wasserlösliche Salzverschmutzungen verunreinigt sein kann.

### Vergleichsversuch

Eine gravierend durch Ausblühungen, Vergipsungen, Verkalkungen und Verkrustungen massiv belastete Klinkerwand, bei der kalkhaltiges Spritzwasser sowohl selbst Salz angetragen hat als auch hygroskopisch Baustoff-Zusätze aus dem Fugenmörtel zum Aufziehen und Ausblühen von Salzverschmutzungen brachte, wurde in mehrere, gleich schwer belastete Flächen eingeteilt.

Stand der Technik: Die eine Hälfte der Flächen wurde mit einem kommerziell erhältlichen Reinigungs-Set umfassend einen sauren Vor-Reiniger und eine nachfolgende Imprägnierbeschichtung auf Öl-Basis auf etablierte Weise behandelt: Nach vorbereitendem Abbürsten (15 Minuten) und intensivem Vornässen wurde der saure Reiniger aufgebracht, die Reinigung unter Bürsten der Fläche durchgeführt, und die gereinigte Fläche durch mehrfaches Spülen gereinigt. Nach dem Trocknen der Fläche wurde die Imprägnierbeschichtung aufgebracht. Das Reinigen dauerte etwa 90 Minuten, die notwendigen Spül- und Trocknungsschritte erforderten weitere 3 Stunden Arbeit und die Trocknung war bei warmem Sommerwetter nach etwa 1,5 Tagen abgeschlossen. Nach Auftragung der Imprägnierung (45 Minuten) lag schließlich eine vollständig behandelte Fläche vor, bei der jedoch die Imprägnierung nicht vollständig aufzog und stellenweise neue Grauschleier hervortraten. Bei rund 3 Stunden Arbeit und einem Wasserverbrauch von rund 0,7 Kubikmetern = 700 Litern konnte so nach etwa 2 Tagen eine imprägnierte Wand mit optisch sichtbaren, nachzubessernden Stellen nach dem Stand der Technik erreicht werden.

Erfindung: Die andere Hälfte der Fläche wurde gemäß dem veranschaulichenden, besonders vorteilhaften Ausführungsbeispiel behandelt. Die Fläche wurde vorbereitend gebürstet, mit Imprägnierbeschichtung besprüht, nach 10 Minuten Einwirkzeit mit der Säurelösung besprüht, 10 Minuten lang gebürstet und abschließend mit Wasser besprüht (Verbrauch: 37 Liter), um den Reiniger zu entfernen. Nach 3 Stunden hatte die Imprägnierung unter direkter Sonneneinstrahlung bereits eine griff- und staubfeste Schicht ausgebildet, welche auf die Poreninnenwände aufgezogen war, ohne die Poren zu verschließen. Mit rund 45 Minuten Arbeit konnte bei gleicher Flächengröße und Flächenverschmutzung innerhalb von 3 Stunden eine optisch einheitliche, farbverstärkt gereinigte Fläche erreicht werden, welche keinerlei optisch abweichenden Stellen oder Flecken aufwies.

Im Vergleich benötigt der Stand der Technik ein Zigfaches an Zeit sowie ein Vielfaches an Wasser, um zu einem schlechteren Ergebnis zu gelangen. Die Erfinder führen diesen drastischen Unterschied auf die besonders langsame Trocknung und Saugfähigkeit zurück, welche gerade bei Mauerwerk- und unlasierten Keramik-Oberflächen anzutreffen ist: Die engen Poren in diesem Bereich sind schwierig wirksam zu spülen. Das vorbereitende Nässen transportiert Salze in die Poren, welche selbst nach einer Imprägnierung gemäß Produktanleitung Salz wieder an die Oberfläche transportieren, die Imprägnierung stellenweise verhindern, zerstören und ein Nachbessern notwendig werden lassen. Demgegenüber spart das erfindungsgemäße Verfahren erheblich Zeit und Wasser und führt bei überraschend einfacher Arbeitsweise zu einem klar überlegenen Ergebnis.

## Patentansprüche

1. Verfahren zur Reinigungsbehandlung einer Salzverschmutzungen aufweisenden, offenporigen Fläche unter Verwendung mindestens zweier Komponenten umfassend eine wässrige, starke Säurelösung und eine Flüssigkeit abweisende Imprägnierbeschichtung, **dadurch gekennzeichnet, dass** das Verfahren die Schritte umfasst, dass
a1)die offenporige, trockene Fläche mit einer hydrophoben Imprägnierbeschichtung beaufschlagt wird
a2)die hydrophobe Imprägnierbeschichtung in die Poren einzieht und diese hydrophobiert, wobei die Imprägnierbeschichtung eine kriechfähige, hydrophobierende Komponente aufweist, welche stetig weiter in die Poren einzieht
b1)die hydrophobierte Fläche mit der wässrigen Säurelösung beaufschlagt wird, wobei die Säurelösung die Salzverschmutzungen ablöst und die Fläche reinigt
c1) die Salz enthaltende Säurelösung entfernt wird und
die kriechfähige Komponente unter Öffnung von mit Imprägnierbeschichtung verschlossenen Poren aktiv die Imprägnierbeschichtung aufbringt und eine optisch ebenmäßig imprägnierte, einheitliche, gereinigte Außenfläche ausbildet.

2. Verfahren nach dem vorhergehenden Anspruch, **dadurch gekennzeichnet, dass** in Schritt a2) die Imprägnierbeschichtung über ein nicht-ionisches Benetzungsmittel, bevorzugt einen Fettalkohol mit mindestens 14 C-Atomen, besonders bevorzugt einen Fettalkohol mit mindestens 14 C-Atomen in schaumbremsender Kombination mit einem Alkylpolyglycosid, in die Poren eingebracht wird.

3. Verfahren nach einem der vorhergehenden Ansprüche, **dadurch gekennzeichnet, dass** die Imprägnierbeschichtung eine langsam stetig aushärtende Komponente, bevorzugt eine polymerisierende Polymermischung, umfasst.

4. Verfahren nach einem der vorhergehenden Ansprüche, **dadurch gekennzeichnet, dass** die Imprägnierbeschichtung neutral bis schwach sauer eingestellt ist.

5. Verfahren nach einem der vorhergehenden Ansprüche, **dadurch gekennzeichnet, dass** die Imprägnierbeschichtung eine nicht-biogene, hydrophobe Komponente auf Kohlenwasserstoffbasis, besonders bevorzugt ein medizinisches Weißöl, aufweist.

6. Verfahren nach einem der vorhergehenden Ansprüche, **dadurch gekennzeichnet, dass** mindestens ein Beaufschlagen mit einer Komponente gemäß mindestens eines Verfahrens ausgewählt aus der Gruppe bestehend aus Benebeln, Besprühen, Spritzen, Pinseln, Rollen, Bürsten, Fluten, Schäumen, Drucken, Tauchen durchgeführt wird.

7. Verfahren nach einem der vorhergehenden Ansprüche, **dadurch gekennzeichnet, dass** in Schritt b1) die Säurebeaufschlagung für 1 bis 15 Minuten, bevorzugt mechanisch unterstützt, erfolgt.

8. Verfahren nach einem der vorhergehenden Ansprüche, **dadurch gekennzeichnet, dass** die aufgebrachte Imprägnierbeschichtung in Kombination mit allen weiteren, vorhandenen Komponenten in einem Schritt d1) innerhalb von wenigen Stunden bis maximal 3 Tagen eine staub- und grifffeste, farbverstärkende Imprägnierung ausbildet.

9. Verfahren zur Reinigungsbehandlung einer Salzverschmutzungen aufweisenden, offenporigen Fläche, bevorzugt Boden- oder Wandfläche, besonders bevorzugt Blendmauerwerk auf Basis offenporiger Steine, unter Verwendung mindestens zweier Komponenten umfassend eine wässrige, starke Säurelösung und eine Flüssigkeit abweisende Imprägnierbeschichtung nach einem der vorhergehenden Ansprüche, **dadurch gekennzeichnet, dass** das Verfahren die Schritte umfasst, dass
a1)die offenporige, trockene Fläche mit einer hydrophoben Imprägnierbeschichtung beaufschlagt, bevorzugt besprüht, wird,
- die Imprägnierbeschichtung aufweisend mindestens ein schaumbremsendes nicht-ionisches Benetzungsmittel, eine nicht-biogene aromatenfreie hydrophobierende Komponente, mindestens ein unter Licht- und Sauerstoffeinfluss in Stunden bis Tagen polymerisierendes Monomer, Rest Stell-, Pflege- und Hilfsstoffe sowie unvermeidbare Verunreinigungen
a2) die hydrophobe Imprägnierbeschichtung innerhalb von 5 bis 10 Minuten in die Poren einzieht und diese hydrophobiert,
b1) die hydrophobierte Fläche mit der wässrigen Säurelösung beaufschlagt, bevorzugt besprüht, wird,
- die Säurelösung aufweisend bis zu 5% schaumbildende Tenside, mindestens eine Mineralsäure, mindestens einen pH-Regulator für den Bereich pH = 0 bis 5 - bevorzugt 0,5 bis 4,5, besonders bevorzugt 1 bis 2,
Rest Stell-, Pflege- und Hilfsstoffe sowie unvermeidbare Verunreinigungen,
und die Salzverschmutzungen innerhalb von 15 Minuten unter Schaumbildung ablöst und die Fläche gereinigt, bevorzugt mechanisch unterstützt gereinigt, wird
c1) die Salz enthaltende Säurelösung entfernt, bevorzugt abgespült, wird
d1) innerhalb von wenigen Stunden bis maximal 3 Tagen die aufgebrachte Imprägnierbeschichtung mit allen Komponenten eine staub- und grifffeste, farbverstärkende, offenporige Imprägnierung ausbildet.
